# EUROPÄISCHE PATENTSCHRIFT

(11) **EP 2 644 513 B1**
(45) Veröffentlichungstag und Bekanntmachung des Hinweises auf die Patenterteilung: **14.05.2014**
(21) Anmeldenummer: 12002095.3
(22) Anmeldetag: 26.03.2012
(51) Int. Cl.: B65B 25/00, B65B 51/14, B65B 7/16, B65B 7/00

(54) **Siegeleinrichtung und Verfahren zum Versiegeln von Behälterschalen mit einer Siegelfolie**
Sealing device and method for sealing container shells with a sealing film
Dispositif de scellement et procédé de scellement de coques de récipients avec un film de scellement

(43) Veröffentlichungstag der Anmeldung: 02.10.2013
(73) Patentinhaber: Harro Höfliger Verpackungsmaschinen GmbH, 71573 Allmersbach im Tal (DE)
(72) Erfinder: Straub, Klaus, 71522 Backnang-Unterschöntal (DE); Egelkraut, Udo, 71554 Wiessach im Tal (DE)
(74) Vertreter: Zurhorst, Stefan

(56) Entgegenhaltungen:
- JP-A- 9 169 320

## Beschreibung

Die Erfindung betrifft eine Siegeleinrichtung zum Versiegeln von Behälterschalen mit einer Siegelfolie der im Oberbegriff des Anspruchs 1 angegebenen Gattung sowie ein zugehöriges Verfahren zum Versiegeln solcher Behälterschalen mit einer Siegelfolie.

In vielfältigen Anwendungsfällen werden Produkte in Siegelbehältern aufbewahrt. Nach dem Stand der Technik erfolgt der zugehörige Verpackungsvorgang, indem einzelne Behälterschalen bereitgestellt und mit dem jeweiligen Produkt befüllt werden. Mehrere solcher einzelner und befüllter Behälterschalen werden dann anschließend und gleichzeitig mit einer durchgehenden Siegelfolie abgesiegelt, wodurch ein zusammenhängender Behälterstreifen entsteht. Erst später werden die Behälterstreifen zu einzelnen versiegelten Behältern vereinzelt. In vorbekannten Ausführungsformen werden die mehreren Behälterschalen in Form einer Matrix angeordnet. Ein gemeinsamer, die gesamte Matrix abdeckender Siegelkopf wird dann unter Zufuhr von Druck und Temperatur unter Zwischenlage der Siegelfolie auf die in Behälteraufnahmen gehaltenen und befüllten Behälterschalen abgesenkt. Problematisch ist hierbei, dass die einzelnen Behälterschalen Dicken- und Lagetoleranzen aufweisen können, die der große, gemeinsam auf die mehreren Behälterschalen einwirkende Siegelkopf nicht ausgleichen kann. Im Ergebnis besteht die Gefahr, dass einzelne Behälterschalen und die dort aufliegende Siegelfolie keinen gleichmäßigen und ausreichenden Siegeldruck erfahren, oder dass einzelne zu dicke Behälterränder unter zu hohem Druck übermäßig aufschmelzen und sich dabei zu sehr verformen. Die Versiegelung kann in der Folge fehlerhaft sein und zu unerwünschten Ausschüssen führen.

Mit dem vorgenannten Problem befassen sich die EP 1 545 977 B1 und EP 1 013 548 B1, wobei in verschiedenen Ausgestaltungen das gleiche Grundprinzip des Toleranzausgleichs zum Einsatz kommt. Die einzelnen, gleichzeitig zu versiegelnden Behälterschalen werden vereinzelt in eigenen, ihnen zugeordneten Behälteraufnahmen gehalten, wobei diese einzelnen Behälteraufnahmen unabhängig voneinander und relativ zueinander nachgiebig beweglich sind. Ein Stempel mit einem großen, mehrere Behälterunterteile abdeckenden Siegelkopf oder auch einzelne Stempel mit einem einzelnen, je einem Behälterunterteil zugeordneten Siegelkopf werden insbesondere pneumatisch gegen die Behälterunterteile verfahren, so dass ein Siegelvorgang stattfindet. Der pneumatische Verfahrdruck wird geregelt, so dass in Verbindung mit der nachgiebigen Einzelaufhängung der einzelnen Behälterunterteile ein gleichmäßiger Siegeldruck mit Toleranzausgleich erfolgen soll.

Problematisch hierbei ist der hohe Aufwand für die Vorrichtung und den Regelkreis. Die Einzellagerung der Behälterunterteile ist aufwendig und kostenintensiv, wobei eine exakte Abstimmung des geregelten Anpressdruckes erforderlich ist.

Der Erfindung liegt die Aufgabe zugrunde, eine gattungsgemäße Siegeleinrichtung derart weiterzubilden, dass bei vereinfachter Konstruktion und erhöhter Prozesssicherheit eine zuverlässige Siegelung mit Toleranzausgleich durchgeführt werden kann.

Diese Aufgabe wird durch eine Siegeleinrichtung mit den Merkmalen des Anspruchs 1 gelöst.

Der Erfindung liegt des Weiteren die Aufgabe zugrunde, ein vereinfachtes Siegelverfahren mit erhöhter Prozesssicherheit bei zuverlässigem Toleranzausgleich anzugeben.

Diese Aufgabe wird durch ein Verfahren mit den Merkmalen des Anspruchs 14 gelöst.

Nach der Erfindung ist vorgesehen, dass die mehreren Behälteraufnahmen fest miteinander verbunden und insbesondere in einem gemeinsamen Aufnahmeblock zusammengefasst sind. Mehrere einzelne Siegelköpfe sind in einer Ruheposition mittels je eines passiven Federelementes in der Siegelhubrichtung gegen je einen ihnen zugeordneten Anschlag unter Vorspannung gedrückt. Die Federelemente sind an einem gemeinsamen Federträger gehalten. Es ist ein Verfahrweg des Federträgers mit einem Siegelhub in der Siegelhubrichtung mit einem derartigen Betrag vorgesehen, dass beim Auftreffen der Siegelköpfe auf die ihnen zugeordneten Behälteraufnahmen unter Zwischenlage der Behälterschalen und der Siegelfolie die Siegelköpfe von ihren Anschlägen entgegen der einwirkenden Vorspannung, also entgegen der Siegelhubrichtung abheben.

Im zugehörigen erfindungsgemäßen Verfahren nehmen mehrere fest miteinander verbundene und insbesondere in einem gemeinsamen Aufnahmeblock zusammengefasste Behälteraufnahmen gleichzeitig mehrere Behälterschalen auf. Mehrere einzelne, je einer Behälteraufnahme zugeordnete Siegelköpfe werden in einer Ruheposition mittels je eines passiven Federelementes in der Siegelhubrichtung gegen je einen ihnen zugeordneten Anschlag unter Vorspannung gedrückt. Für das gleichzeitige Aufsiegeln der Siegelfolie auf die mehreren Behälterschalen wird der Federträger, an dem die Federelemente gemeinsam gehalten sind, zusammen mit den Federelementen und den Siegelköpfen in der Siegelhubrichtung relativ zu den Behälteraufnahmen so weit verfahren, dass die Siegelköpfe beim Auftreffen auf die ihnen zugeordneten Behälteraufnahmen unter Zwischenlage der Behälterschalen und der Siegelfolie von ihren Anschlägen entgegen der auf sie einwirkenden Vorspannung abheben.

Als Federelemente im Sinne der Erfindung sind keine elastisch nachgiebigen Antriebe zur angetriebenen Erzeugung eines Stellweges, sondern solche Federelemente zu verstehen, die unter Einwirkung einer äußeren Kraft, namentlich unter Einwirkung des sich aufbauenden Siegeldruckes passiv, also antriebslos einen elastischen Auslenkungsweg erfahren, ohne dass damit ein aktiv seitens des Federelementes angetriebener Verstellweg einhergeht. Die Federelemente werden zwar mittels des Federträgers in der Siegelhubrichtung bewegt und passiv mitgeführt, ohne aber selbst aktiv antreibend zum Siegelhub beizutragen.

Die erfindungsgemäße Siegeleinrichtung und das zugehörige erfindungsgemäße Verfahren erlauben zunächst die Verwendung von konstruktiv einfach ausgestalteten Behälteraufnahmen, die insbesondere in einem gemeinsamen Aufnahmeblock zusammengefasst sind. Abweichend vom Stand der Technik ist keine relative Nachgiebigkeit der einzelnen Behälteraufnahmen gegeneinander bzw. gegenüber der Maschine insgesamt erforderlich. Vielmehr reicht es aus und ist auch so vorgesehen, dass sie fest miteinander verbunden sind, ohne dass dabei eine Nachgiebigkeit in technisch relevanter Größenordnung eine Rolle spielt. Lage- und Dickentoleranzen der dort gleichzeitig eingelegten mehreren Behälterschalen werden bewusst in Kauf genommen und an anderer Stelle, nämlich mittels der einzelnen Siegelköpfe ausgeglichen. Namentlich ist für den Ausgleich der vorgenannten Toleranzen das Wechselspiel der Federelemente, der daran gehaltenen vereinzelten Siegelköpfe, des Federträgers und dessen abgestimmter Siegelhub vorgesehen.

In einer Ausgangsposition vor Beginn des Siegelvorganges bewirken die passiven Federelemente, dass sämtliche Siegelköpfe unter Vorspannung an ihren Anschlägen anliegen und dadurch eine exakt definierte Position einnehmen. Die gesamte Einheit wird nun derart verfahren, dass die Siegelköpfe unter Zwischenlage der Siegelfolie und des Siegelrandes der Behälterschalen auf die fixierten Behälteraufnahmen treffen. Da hier mit Lage- und Dickentoleranzen zu rechnen ist, findet dieses Auftreffen bei einigen Behältern früher statt als bei anderen. An dieser Stelle hört die relative Verfahrbewegung jedoch nicht auf, sondern wird bis zum Erreichen des vorgegebenen Siegelhubes fortgeführt. Der Siegelhub ist derart bemessen, dass sämtliche einzelne Siegelköpfe durch den sich sukzessive einstellenden Anpressdruck der Behälterschalen gegen die Vorspannkraft der einzelnen Federelemente von ihren Anschlägen abheben. Da die Federelemente passiv, also selbst nicht angetrieben sind, setzen sie dieser Abhebebewegung nur ihre fest vorgegebene bzw. fest eingestellte federnde Vorspannkraft entgegen, die im abgehobenen Zustand nicht mehr auf die Anschläge, sondern vollumfänglich auf die Siegelfläche wirkt und dort einen definierten Siegelanpressdruck erzeugt. Da dieser Anpressdruck allein durch die Vorspannkraft des jeweiligen Federelementes definiert wird, ist er in technischer Größenordnung unabhängig von den genannten Lage- und Dickentoleranzen der Behälterunterteile, und stellt sich außerdem separat und unabhängig voneinander für jeden einzelnen Behälter bzw. für jedes einzelne Behälterunterteil samt der zugehörigen Siegelfolie mit dem gewünschten Betrag ein. Mit geringem technischem Aufwand kann bei hoher Prozesssicherheit und wirkungsvollem Toleranzausgleich eine zuverlässige Versiegelung der einzelnen Behälter durchgeführt werden.

In bevorzugter Weiterbildung der Erfindung ist der einzelne Siegelkopf um mindestens eine, bevorzugt mehrere senkrecht zur Siegelhubrichtung stehende Achsen kippbar mit dem ihm zugeordneten Federelement verbunden. Hierdurch wird erreicht, dass der einzelne Siegelkopf nicht nur entgegen der Siegelhubrichtung nachgeben kann, sondern auch mit einer entsprechenden Kippbewegung Schräglagen und vergleichbare Lagetoleranzen der Behälterschalen ausgleichen kann. Zweckmäßig ist hierfür zwischen einem einzelnen Siegelkopf und dem ihm zugeordneten Federelement eine gelenkig mit dem Siegelkopf und auch gelenkig mit dem Federelement verbundene Druckstange vorgesehen. Dies erlaubt einen Toleranzausgleich in nahezu sämtlichen räumlichen Freiheitsgraden.

In einer vorteilhaften Ausführungsform sind zur Bildung des Anschlages für einen einzelnen Siegelkopf insgesamt genau drei Anschlagpunkte vorgesehen. Zweckmäßig sind hierbei der erste Anschlagpunkt durch zwei ebene aufeinandertreffende Flächen, der zweite Anschlagpunkt durch eine dachförmige Kerbe mit einem entsprechenden Gegenstück und der dritte Anschlagpunkt durch eine umlaufend mit einem Rand versehene, insbesondere konische Vertiefung mit einem entsprechenden Gegenstück gebildet. Die genau drei Anschlagpunkte erzeugen im aufliegenden Zustand eine geometrisch exakt definierte Positionierung des Siegelkopfes ohne Überbestimmtheiten. Das Zusammenspiel der ebenen Flächen, der dachförmigen Kerbe mit dem Gegenstück und der genannten Vertiefung mit dem entsprechenden Gegenstück stellen eine exakte räumliche Positionierung in allen Bewegungsfreiheitsgraden sicher. Der auf diese Weise positionierte Siegelkopf wird mit größtmöglicher Exaktheit an die zu versiegelnde Behälterschale herangeführt.

Für die Ausgestaltung der Federelemente kommen Spiralfedern, Elastomerfedern oder dergleichen in Betracht. In einer bevorzugten Ausführungsform ist das Federelement durch eine Gasdruckfeder insbesondere in Form eines Pneumatikzylinders gebildet, wobei der Pneumatikzylinder während des Siegelvorganges mit einer vorbestimmten Druckdifferenz beaufschlagt ist. In einer optional ungeregelten Ausführung wird eine vorbestimmte Druckdifferenz aufgebracht, die sich in Folge des nur sehr kleinen, den Toleranzausgleich herbeiführenden Abhebeweges praktisch nicht bzw. technisch vernachlässigbar nur soweit verändert, dass dies keinen Einfluss auf die Siegelqualität hat. Ergänzend kann es zweckmäßig sein, dass der Pneumatikzylinder zur Beibehaltung der vorbestimmten Druckdifferenz mit einem Druckspeicher verbunden ist. Das Volumen des bzw. der Pneumatikzylinder addiert sich mit dem Volumen des Druckspeichers. Hierdurch wird eine Volumenvergrößerung erzeugt, was die ohnehin kleinen, durch den geringen Abhebeweg verursachten Druckschwankungen weiter verringert bzw. auf ein technisch vernachlässigbares Maß reduziert. In einer Ausführung mit Druckregelung, bei der der Pneumatikzylinder mit einem Druckregelventil versehen bzw. verbunden ist, kann eine noch exaktere Einstellung und konstante Beibehaltung des Zylinderdruckes bzw. der wirkenden Druckdifferenz und damit des Siegeldruckes herbeigeführt werden. Dabei kann es auch zweckmäßig sein, Druckspeicher und Druckregelung miteinander zu kombinieren. In jedem Falle erlaubt dies eine exakte Anpassung der Vorspannkraft und damit des späteren Siegeldruckes an die jeweils vorgesehene Siegelaufgabe. Mit einfachen Mitteln kann sichergestellt werden, dass sämtliche zum Einsatz kommende Gasdruckfedern die gleiche Vorspannkraft und damit den gleichen Siegeldruck erzeugen. Für sämtliche in einem gemeinsamen Siegelvorgang versiegelte Behälter ergeben sich nahezu exakt gleiche und reproduzierbare Siegelverhältnisse.

In einer vorteilhaften Variante ist der vorgenannte Pneumatikzylinder abseits des Siegelvorganges als Hubzylinder ansteuerbar. Sofern also im Einzelfall kein Siegelbetrieb vorgesehen ist, wird der genannte Pneumatikzylinder nicht mehr als passives Federelement eingesetzt, sondern als aktiver Hubzylinder umfunktioniert. Einzelne oder auch sämtliche Siegelköpfe können aktiv angehoben und damit beispielsweise für Wartungszwecke und insbesondere für das Unterbleiben einer Versiegelung von Fehlteilen (z.B. unbefüllte Behälterschalen) außer Betrieb gesetzt werden. Sofern dann wieder der gewöhnliche Siegelvorgang durchgeführt werden soll, können die zurückgezogenen Siegelköpfe gleichermaßen mit dem als Hubzylinder umfunktionierten Pneumatikzylinder gegen ihre Anschläge verfahren werden. Sobald dies geschehen ist und der Pneumatikzylinder mit dem gewünschten Druck beaufschlagt ist, wird der Pneumatikzylinder von seiner Ansteuerung getrennt und nimmt damit wieder seine Funktion als passive Gasdruckfeder an.

Es kann zweckmäßig sein, den Federträger zusammen mit den Federelementen räumlich ortsfest in der Siegeleinrichtung zu positionieren, wobei dann die fest miteinander verbundenen Behälteraufnahmen bzw. der entsprechende Aufnahmeblock für den Siegelvorgang von unten gegen die Siegelköpfe angehoben wird. In einer bevorzugten Ausführungsform ist eine ortsfest innerhalb der Siegeleinrichtung gehaltene Grundplatte vorgesehen, auf der die fest miteinander verbundenen Behälteraufnahmen und insbesondere der Aufnahmeblock während des Siegelvorganges ortsfest positioniert ist. Der Federträger ist oberhalb der Grundplatte positioniert, wobei der Federträger mit den mehreren daran gehaltenen Federelementen und den zugehörigen Siegelköpfen aus einer oberen Ausgangsposition heraus nach unten zur Grundplatte und zu den Behälteraufnahmen hin in der Siegelhubrichtung verfahrbar ist. Dies erlaubt eine einfache Handhabung insbesondere der Behälteraufnahmen bzw. des Aufnahmeblocks, da diese ohne Berücksichtigung eines Hubweges auf der Grundplatte getaktet in ihre Siegelposition verfahren und nach erfolgtem Siegelvorgang der weiteren Verarbeitung zugeführt werden können.

In bevorzugter Weiterbildung bilden der oberhalb der Grundplatte angeordnete Federträger, ein unterhalb der Grundplatte angeordneter Bodenträger und mindestens zwei Säulen zusammen einen geschlossenen Rahmen, der aus der oberen Ausgangsposition heraus gegenüber der Grundplatte mit den Behälteraufnahmen in der Siegelhubrichtung mittels eines geeigneten Antriebes nach unten absenkbar ist. Durch die rahmenartige Ausgestaltung entsteht eine steife Konstruktion, die mit der gewünschten Genauigkeit reproduzierbar und ohne Lageabweichungen zwischen der oberen Ausgangsposition und der unteren Siegelposition verfahren werden kann. Zweckmäßig ist zwischen dem Bodenträger und der Grundplatte ein Stellelement insbesondere in Form eines Pneumatikzylinders angeordnet, mittels dessen der geschlossene Rahmen in der Siegelhubrichtung absenkbar und in Gegenrichtung anhebbar ist. Durch die Anordnung des Pneumatikzylinders unterhalb der Grundplatte und dessen Einwirkung auf den unteren Bodenträger ist eine platzsparende und insbesondere sehr steife Bauweise geschaffen, bei der der den Siegelhub erzeugende Antrieb abseits und ohne störende räumliche Interaktion mit dem eigentlichen Siegelvorgang angeordnet ist. Die hohe Steifigkeit der Konstruktion vermeidet unerwünschte Fluchtungstoleranzen und fördert die Genauigkeit beim Siegelvorgang.

In einer bevorzugten Ausführungsform umfasst der Siegelkopf einen Grundkörper sowie eine lösbar und austauschbar am Grundkörper befestigte Siegelplatte. Am ein- oder mehrteiligen Grundkörper sind ein Heizmantel und ein Thermofühler angebracht. Die der jeweiligen Behälterschale zugewandte Siegelplatte bewirkt mit ihrer Siegeloberfläche den eigentlichen Siegelvorgang, wobei über den Heizmantel und den Thermofühler eine exakte Steuerung und insbesondere eine exakte Regelung der für den Siegelvorgang erforderlichen Siegeltemperatur vorgenommen werden kann. Da der Heizmantel und der Thermofühler am Grundkörper und nicht an der Siegelplatte angebracht sind, verbleiben diese am Grundkörper auch dann, wenn die Siegelplatte demontiert bzw. ausgetauscht wird. Die Siegelplatte selbst weist nur im montierten Zustand einen wärmeübertragenden Kontakt zum Thermofühler und - indirekt über den Grundkörper - zum Heizmantel auf, ohne jedoch selbst fest mit einem Heizelement bzw. einem Thermofühler verbunden zu sein. Ein beispielsweise verschleißbedingter Austausch betrifft nur die Siegelplatte für sich alleine genommen, nicht aber den Thermofühler bzw. den Heizmantel, so dass die Siegelplatte als Verschleißteil einfach und kostengünstig ausgestaltet sein kann.

Ein Ausführungsbeispiel der Erfindung ist nachfolgend anhand der Zeichnung näher beschrieben. Es zeigen:
- Fig. 1: in einer schematischen Übersichtsdarstellung den prinzipiellen Aufbau der erfindungsgemäßen Siegeleinrichtung mit einer ortsfest gehaltenen Grundplatte und einem relativ dazu absenkbaren Rahmen, wobei vereinzelte Siegelköpfe mit einzelnen ihnen zugeordneten Federelementen am Federträger des Rahmens gehalten sind;
- Fig. 2: in einer perspektivischen Ansicht einen einzelnen Siegelkopf mit austauschbarer Siegelplatte und mit drei Vorsprüngen zur Bildung dreier Anschlagpunkte;
- Fig. 3: in einer perspektivischen Unteransicht eine konkrete Ausführungsform des Federträgers nach Fig. 1 mit mehreren daran gehaltenen Siegelköpfen nach Fig. 2;
- Fig. 4: in einer Schnittdarstellung eine konkrete Ausführungsform der schematisch in Fig. 1 dargestellten Siegeleinrichtung in ihrer Ausgangsposition, in der die einzelnen Siegelköpfe unter Vorspannung an ihren Anschlägen anliegen, ohne in Kontakt mit den zu versiegelnden Behältern zu stehen;
- Fig. 5: in einer vergrößerten Detaildarstellung die Anordnung nach Fig. 4 mit in eine Kontaktposition abgesenktem Siegelkopf beim Auftreffen auf die zu versiegelnde Behälterschale;
- Fig. 6: die Anordnung nach den Fig. 4 und 5 im weiter zu einer Siegelposition abgesenkten Zustand mit von ihren Anschlägen abgehobenen Siegelköpfen.

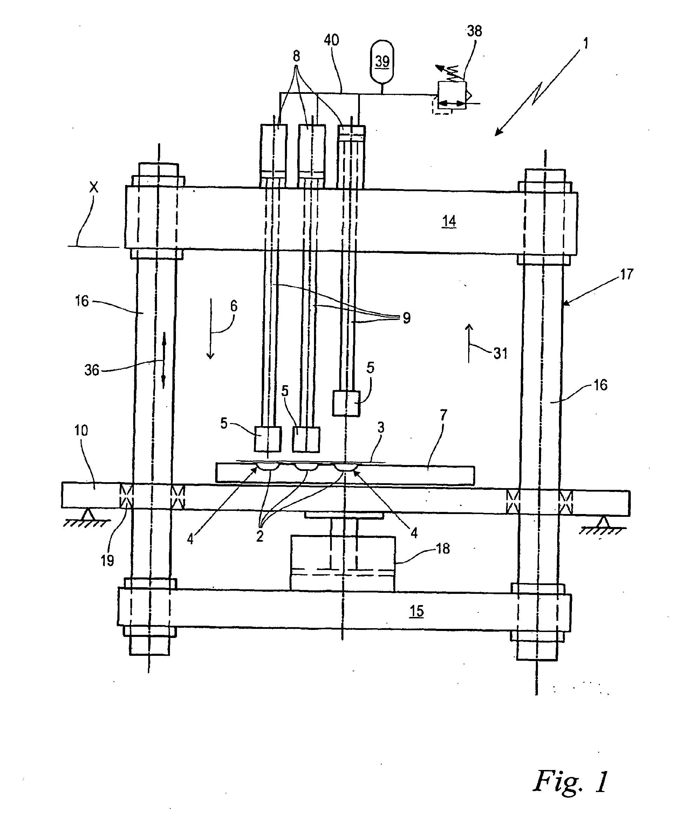

Fig. 1 zeigt in einer schematischen Funktionsdarstellung beispielhaft den prinzipiellen Aufbau und die Funktionsweise der erfindungsgemäßen Siegeleinrichtung 1 und des zugehörigen erfindungsgemäßen Siegelverfahrens. Die Siegeleinrichtung 1 und das zugehörige Verfahren sind zum Versiegeln von einzelnen Behälterschalen 2 mit einer durchgehenden, mehrere Behälterschalen 2 abdeckenden Siegelfolie 3 vorgesehen. Die Siegeleinrichtung 1 umfasst mehrere Behälteraufnahmen 4 für die gleichzeitige Aufnahme mehrerer Behälterschalen 2. Die mehreren Behälteraufnahmen 4 sind fest in dem Sinne miteinander verbunden, dass sie keine in technischer Größenordnung relevante Relativbewegung gegeneinander zulassen. Dies kann dadurch herbeigeführt sein, dass einzelne Behälteraufnahmen 4 als Einzelteile ausgeführt und beispielsweise miteinander verschraubt, geklemmt oder in anderer Weise fest miteinander verbunden sind. Im gezeigten Ausführungsbeispiel ist ein zusammenhängender, im wesentlichen starrer Aufnahmeblock 7 vorgesehen, in dem die mehreren Behälteraufnahmen 4 eingeformt sind, wodurch die mehreren Behälteraufnahmen 4 gemeinsam in dem Aufnahmeblock 7 zusammengefasst sind. Für den späteren Siegelvorgang nehmen die zusammengefassten Behälteraufnahmen 4 gleichzeitig mehrere Behälterschalen 2 in dem Sinne auf, dass je eine Behälterschale 2 in je einer Behälteraufnahme 4 zu liegen kommt.

Die gezeigte Siegeleinrichtung 1 ist in ihrer Betriebsposition aufrecht relativ zur Gewichtskraftrichtung derart dargestellt, dass die einzelnen Behälterschalen 2 nach oben offen sind und von oben mit einem entsprechenden Produkt befüllt werden können. Im gezeigten Ausführungsbeispiel werden hierzu ophthalmische Linsen, insbesondere Kontaktlinsen mit einer entsprechenden Aufbewahrungsflüssigkeit in die einzelnen Behälteraufnahmen 4 eingefüllt. Natürlich können im Rahmen der Erfindung auch andere Produkte eingefüllt und verpackt werden.

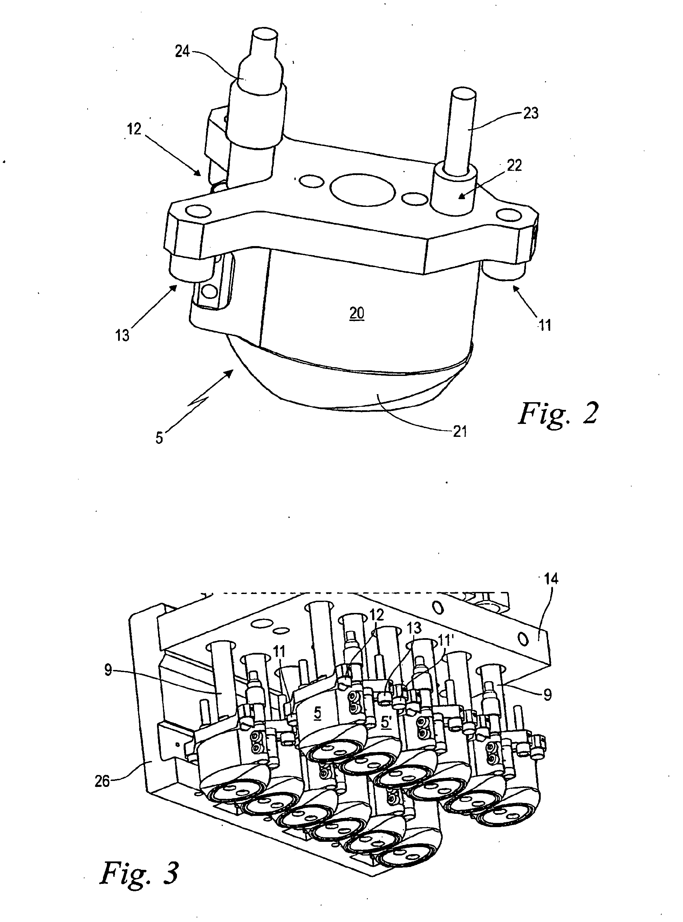

Jeder einzelnen Behälteraufnahme 4 und damit jeder einzelnen darin gehaltenen Behälterschale 2 ist je ein einzelner Siegelkopf 5 zugeordnet, wobei hier der besseren Übersichtlichkeit halber beispielhaft nur drei Behälteraufnahmen 4 mit drei darin gehaltenen Behälterschalen 2 und drei zugeordneten Siegelköpfen 5 dargestellt sind. In der tatsächlich bevorzugten Ausführungsform entsprechend der weiter unten näher beschriebenen Ausgestaltung nach Fig. 3 sind insgesamt zwei Reihen zu je sechs Behälteraufnahmen 4 und Siegelköpfen 5 für die gleichzeitige Versiegelung einer entsprechenden Anzahl von Behälterschalen 2 vorgesehen. Natürlich kann auch eine abweichende Anzahl und/oder eine abweichende matrixartige Verteilung der Behälteraufnahmen 4 und Siegelköpfe 5 vorgesehen sein. Die mehreren Siegelköpfe 5 sind für das gleichzeitige Aufsiegeln der durchgehenden Siegelfolie 3 auf die mehreren Behälterschalen 2 in einer Siegelhubrichtung 6 relativ zu den Behälteraufnahmen 4 verfahrbar. Hierzu werden die Siegelköpfe 5 von oben in der Siegelhubrichtung 6 nach unten auf die Behälteraufnahmen 4 unter Zwischenlage der Siegelfolie 3 und der Siegelränder der Behälterschalen 2 abgesenkt, wobei sich durch das Aufliegen der Siegelköpfe 5 ein Siegeldruck zwischen der Siegelfolie 3 und dem Siegelrand der Behälterschalen 2 aufbaut. Unter Einwirkung dieses Siegeldruckes und von Temperatur wird hierdurch die Siegelfolie 3 auf den Siegelrand der Behälterschalen 2 aufgesiegelt. Zwei der insgesamt drei in Fig. 1 dargestellten Siegelköpfe 5 befinden sich hierzu in ihrer unteren Betriebsposition für den Siegelvorgang, während der dritte, in der Darstellung nach Fig. 1 rechte Siegelkopf 5 relativ dazu in Richtung eines Pfeiles 31 angehoben und damit beispielsweise für Wartungszwecke und insbesondere für das gewollte Unterbleiben einer Versiegelung von Fehlteilen (z.B. unbefüllte Behälterschalen) außer Betrieb gesetzt ist. Einzelheiten hierzu sind weiter unten näher beschrieben.

Jeder der einzelnen Siegelköpfe 5 ist an je einem oberhalb davon angeordneten passiven Federelement 8 befestigt, wozu im gezeigten Ausführungsbeispiel zwischen je einem Siegelkopf 5 und je einem Federelement 8 optional je eine Druckstange 9 angeordnet ist. Die Federelemente 8 sind über Druckleitungen 40 mit einem gemeinsamen Druckspeicher 39 und einem gemeinsamen Druckregelventil 38 verbunden. Auch hierzu sind Einzelheiten weiter unten näher beschrieben. Des Weiteren ist ein Federträger 14 vorgesehen, an dem die Federelemente 8 gemeinsam befestigt sind. Der Federträger 14 ist aktiv antreibbar und dadurch für den Siegelvorgang aus seiner gezeigten Ausgangsposition X gemeinsam mit den passiven Federelementen 8 und daran befestigten Siegelköpfen 5 in der Siegelhubrichtung 6 in Gewichtskraftrichtung nach unten absenkbar.

In der gezeigten Ausführungsform ist hierzu eine ortsfest innerhalb der Siegeleinrichtung 1 gehaltene Grundplatte 10 vorgesehen, auf der die fest miteinander verbundenen Behälteraufnahmen 4 und insbesondere der hier gezeigte Aufnahmeblock 7 mit den darin integrierten Behälteraufnahmen 4 während des Siegelvorganges ortsfest positioniert ist. Der Federträger 14 ist hier oberhalb der Grundplatte 10 positioniert und gemeinsam mit den mehreren daran gehaltenen Federelementen 8 und den zugeordneten Siegelköpfen 5 aus der gezeigten oberen Ausgangsposition X heraus nach unten zur Grundplatte 10 und zu den Behälteraufnahmen 4 hin in der Siegelhubrichtung 6 verfahrbar. Vorrangig kommt es aber nur auf die Relativbewegung zwischen dem Federträger 14 und den Behälteraufnahmen 4 an. Ebenso kann es im Rahmen der Erfindung zweckmäßig sein, den Federträger 14 ortsfest zu positionieren und stattdessen die Behälteraufnahmen 4 bzw. die Grundplatte 10 für den Siegelvorgang anzuheben.

Unterhalb der Grundplatte 10 ist noch ein Bodenträger 15 vorgesehen, so dass die Grundplatte 10 zwischen dem Federträger 14 und dem Bodenträger 15 zu liegen kommt. Der Federträger 14 und der Bodenträger 15 sind durch mindestens zwei Säulen 16 derart miteinander verbunden, dass sie gemeinsam einen starren Rahmen 17 bilden, der als Baueinheit gemeinsam mit den Federelementen 8 und den Siegelköpfen 5 entsprechend einem Doppelpfeil 36 relativ zur feststehenden Bodenplatte 10 verfahrbar ist. Hierfür sind in der Grundplatte 10 Kugelbüchsen 19 angeordnet, durch die die Säulen 16 vertikal hindurchgeführt sind. Die Kugelbüchsen 19 oder alternativ vergleichbare Lineargleitlager erlauben einerseits die vorgenannte Hubbewegung des Rahmens 17 gegenüber der Grundplatte 10, und bieten dabei andererseits eine sehr steife und damit sehr genaue Führung. Für den aktiven Antrieb der vorgenannten Hubebewegung ist im gezeigten Ausführungsbeispiel zwischen dem Bodenträger 15 und der Grundplatte 10 ein Stellelement angeordnet, welches im gezeigten Ausführungsbeispiel ein Pneumatikzylinder 18 ist, und mittels dessen der geschlossene Rahmen 17 in der Siegelhubrichtung 6 aus der gezeigten Ausgangsposition X heraus absenkbar und auch in Gegenrichtung anhebbar ist.

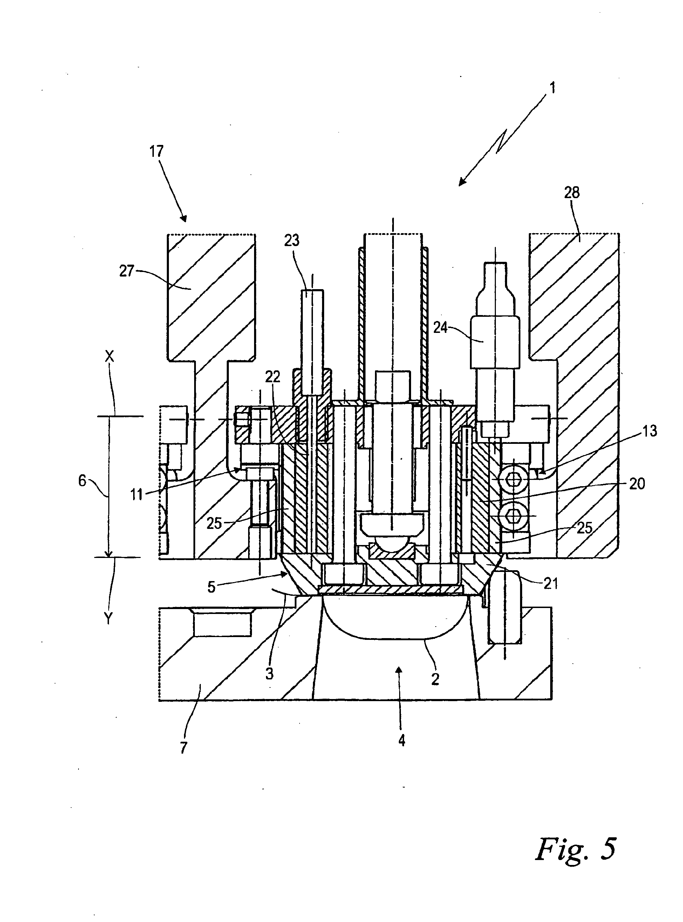

Fig. 2 zeigt in einer perspektivischen Ansicht einen einzelnen Siegelkopf 5 nach Fig. 1 in einer konkret auskonstruierten Ausführungsform. Der Siegelkopf 5 umfasst einen Grundkörper 20 sowie auf seiner in Einbaulage der zugeordneten Behälterschale 2 (Fig. 1) zugewandten Unterseite eine lösbar und austauschbar am Grundkörper 20 befestigte Siegelplatte 21. An der dem Grundkörper 20 gegenüberliegenden Unterseite der Siegelplatte 21 ist eine Siegelfläche ausgebildet, die beim Siegelvorgang auf die Siegelfolie 3 (Fig. 1) gepresst wird. Der Grundkörper 20 ist mit insgesamt drei radial hervorstehenden Armen versehen, die jeweils einen weiter unten näher beschriebenen Anschlagpunkt 11, 12, 13 bilden. Von oben nach unten ist in den Grundkörper 20 ein Thermofühler 22 mit einem Anschlusskabel 23 eingeführt. Außerdem führt nach oben aus dem Grundkörper 20 ein elektrischer Heizungsanschluss 24 heraus. Weitere Einzelheiten hierzu sind weiter unten im Zusammenhang mit Fig. 5 näher beschrieben.

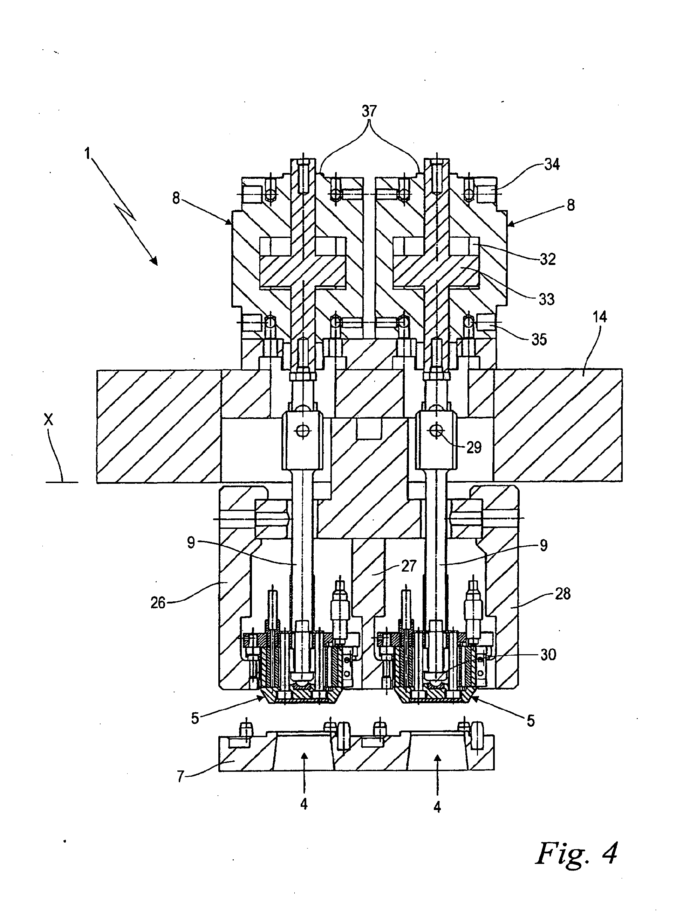

Fig. 3 zeigt in einer perspektivischen Unteransicht einen konkret auskonstruierten Abschnitt eines Federträgers 14 nach Fig. 1, auf dessen Oberseite zwei Reihen mit je sechs hier nicht dargestellten Federelementen 8 befestigt sind. Die zugeordneten Druckstangen 9 sind durch Bohrungen im Federträger 14 hindurchgeführt und tragen je einen Siegelkopf 5 nach Fig. 2. An einer Längskante des Federträgers 14 ist eine Halteplatte 26 befestigt. Zwischen den beiden Reihen von Siegelköpfen 5 und an der gegenüberliegenden Längskante des Federträgers 14 sind weitere Halteplatten 27, 28 vorgesehen, die in Fig. 3 der besseren Übersicht halber nicht dargestellt, wohl aber in Fig. 4 erkennbar sind. Die Halteplatten 26, 27, 28 sind für die Bildung der Anschlagpunkte 11, 12, 13 mit entsprechenden Gegenstücken versehen. Im Detail ist erkennbar, dass der erste Anschlagpunkt 11 eines einzelnen Siegelkopfes 5 durch zwei ebene, aufeinandertreffende Flächen, der zweite Anschlagpunkt 12 durch eine dachförmige Kerbe mit einem im Detail nicht dargestellten entsprechenden Gegenstück, und der dritte Anschlagpunkt 13 durch eine umlaufend mit einem Rand versehene, hier als konische Vertiefung mit einem ebenfalls im Detail nicht dargestellten Gegenstück gebildet sind. Weiter zeigt Fig. 3, dass zwei benachbarte Siegelköpfe 5, 5' wechselseitig um 180° verdreht eingebaut sind, so dass die zweiten und dritten Anschlagpunkte 12, 13 eines Siegelkopfes 5 neben dem ersten Anschlagpunkt 11' des benachbarten Siegelkopfes 5' zu liegen kommen.

Durch die Anschlagpunkte 11, 12, 13 ist am Federträger 14 bzw. dessen Halteplatten 26, 27, 28 (Fig. 4) ein Anschlag für die mehreren Siegelköpfe 5, 5' gebildet, gegen die mehrere Siegelköpfe 5, 5' in einer Ruheposition mittels der jeweils ihnen zugeordneten passiven Federelemente 8 unter Vorspannung angedrückt sind.

Fig. 4 zeigt in einer Längsschnittdarstellung eine konkret auskonstruierte Siegeleinrichtung 1 nach dem Funktionsprinzip entsprechend der Darstellung nach Fig. 1. Der Federträger 14 ist in Übereinstimmung mit Fig. 1 gemeinsam mit den Federelementen 8 und den Siegelköpfen 5 in einer oberen Ausgangsposition X dargestellt, wobei zwischen den Siegelköpfen 5 und dem Aufnahmeblock 7 mit den Behälteraufnahmen 4 ein vertikaler Abstand verbleibt. In der gezeigten Ausgangsposition X können die Behälteraufnahmen 4 bzw. der Aufnahmeblock 7 mit den mehreren gleichzeitig darin gehaltenen Behälterschalen 2 (Fig. 1) in Vorbereitung für den späteren Siegelvorgang lagerichtig unterhalb der Siegelköpfe 5 positioniert werden.

Fig. 4 lässt weiter erkennen, dass die passiven Federelemente 8 jeweils als Gasdruckfeder, genauer als Pneumatikzylinder 37 mit einem inneren Zylinder 32 und einem in Vertikalrichtung darin verschiebbar angeordneten Kolben 33 ausgeführt sind. Die einzelnen Siegelköpfe 5 sind mittels der jeweils ihnen zugeordneten Druckstangen 9 mit dem jeweiligen Kolben 33 kraftübertragend verbunden. Dabei ist eine Verbindung der Druckstange 9 mit dem Kolben 33 mittels eines oberen Gelenkes 29 sowie mit dem Siegelkopf 5 mittels eines unteren Gelenkes 30 vorgesehen. Die Gelenke sind mehrachsig, wozu am unteren Gelenk 30 ein Kugelgelenk vorgesehen ist.

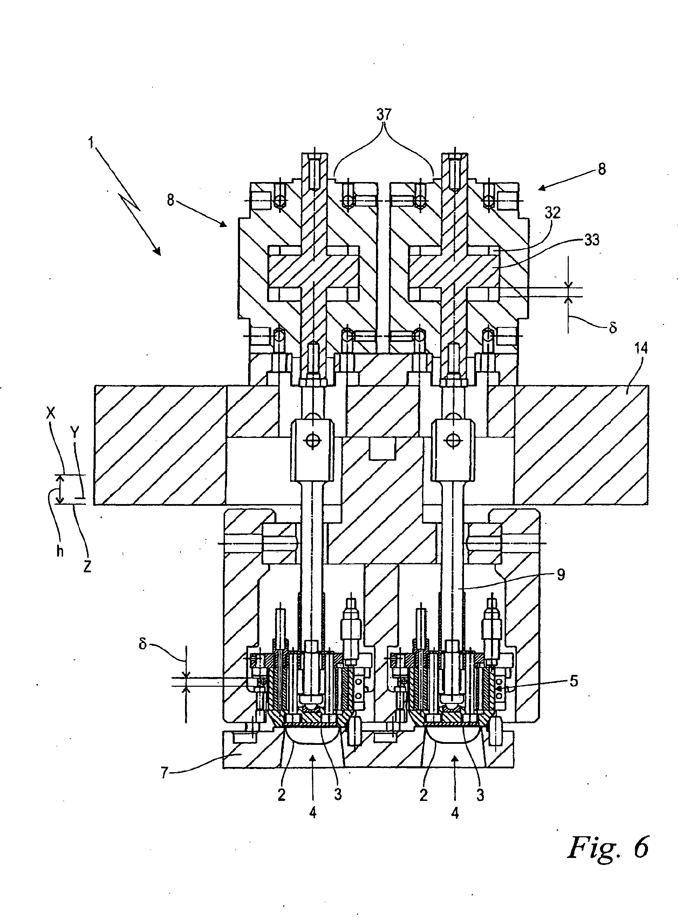

Die Pneumatikzylinder 37 sind mit Druckanschlüssen 34, 35 versehen, über die der jeweilige Zylinder 32 oberhalb und auch unterhalb des Kolbens 33 mit einem bestimmten Gas- bzw. Luftdruck beaufschlagt werden kann. Eine nicht dargestellte Steuereinheit ist dazu ausgelegt, die Pneumatikzylinder 37 je nach Bedarf wahlweise für den Siegelvorgang als passive, nicht angetriebene Gasdruckfeder oder optional bei Unterbindung des Siegelvorganges als aktiv angetriebenen Hubzylinder anzusteuern bzw. einzusetzen. Für den Siegelbetrieb und vorbereitend für den späteren Siegelvorgang wird am Kolben 33 eine bestimmte, vorgegebene Druckdifferenz eingestellt. Hierzu werden die unteren, auf die jeweiligen Unterseiten der Kolben 33 wirkenden Druckanschlüsse 35 derart auf Durchgang geschaltet, dass dort Umgebungsdruck eingespeist wird. Über die oberen, auf die jeweiligen Oberseiten der Kolben 33 wirkenden Druckanschlüsse 34 wird ein vorbestimmter Überdruck in den jeweiligen Zylinder 32 eingespeist, so dass der Pneumatikzylinder 37 während des Siegelvorganges beidseitig des Kolbens 33 mit einer vorbestimmten Druckdifferenz beaufschlagt ist. In der gezeigten bevorzugten Ausführungsform, die sich aus der Zusammenschau der Fig. 1 und 4 ergibt, sind hierzu die Pneumatikzylinder 37 über ihre oberen Druckanschlüsse 34 und die daran angeschlossenen Druckleitungen 40 untereinander, mit einem gemeinsamen Druckspeicher 39 und mit einem gemeinsamen Druckregelventil 38 verbunden. Mittels des Druckregelventils 38 wird der in den Zylindern 32 wirkende Überdruck und - in Verbindung mit dem Umgebungsdruck an der Unterseite der Kolben 33 - die auf beiden Seiten der Kolben 33 wirkende bzw. resultierende Druckdifferenz auf ein konstantes Maß geregelt. Die genannte Druckdifferenz ist für alle Kolben 33 gleich, da sie auf ihrer Unterseite mit dem gleichen Umgebungsdruck beaufschlagt sind, und da sie auf ihrer Oberseite in den Zylindern 32 mittels der Druckleitungen 40 untereinander und mit dem gemeinsamen Druckregelventil 38 druckübertragend verbunden sind. Es kann aber auch im Rahmen der Erfindung zweckmäßig sein, für jeden einzelnen Zylinder 32 je ein eigenes Druckregelventil 38 und/oder je einen eigenen Druckspeicher 39 vorzusehen. Der zwischen dem Druckregelventil 38 und den Zylindern 32 angeordnete Druckspeicher 39 wirkt als Ausgleichsvolumen zur Verminderung von Druckschwankungen bzw. Schwankungen der Druckdifferenz, die sich aus dem weiter unten im Zusammenhang mit Fig. 6 beschriebenen Abhebeweg δ ergeben können. Der Druckspeicher 39 und das Druckregelventil 38 sind vorteilhafte Optionen, wobei auf eines von beiden oder auf beides je nach Einsatzfall auch verzichtet werden kann. Unabhängig von Fehlen oder Vorhandensein einer Druckregelung und/oder eines Druckspeichers 39 erfolgt aber kein aktiver Antrieb mehr der Kolben 33. Vielmehr wirkt hierdurch die Baueinheit aus Kolben 33 und Zylinder 32 als passive Gasdruckfeder. Die zuvor eingestellte Druckdifferenz drückt den Kolben 33 vertikal nach unten. Dieser Druck wird vom jeweiligen Kolben 33 über die Druckstange 9 auf den jeweiligen Siegelkopf 5 übertragen, so dass dieser in der Ausgangsposition X nach unten in der Siegelhubrichtung 6 gegen seinen zuvor beschriebenen Anschlag gedrückt und dort passiv bzw. antriebsfrei gehalten wird. Die Länge der Druckstange 9 ist derart auf die Position der vorgenannten Anschläge abgestimmt, dass der Kolben 33 selbst innerhalb des Zylinders 32 nicht auf Anschlag läuft und dadurch seine Federvorspannung auf den Siegelkopf 5 aufbringen kann. In dem zuvor beschriebenen und in Fig. 4 gezeigten Zustand der Ausgangsposition X ist die Siegeleinrichtung 1 fertig vorbereitet für den späteren Siegelvorgang.

Sofern aber für bestimmte Zwecke, beispielsweise bei der erkannten Zufuhr von Fehlteilen oder dergleichen eine spätere Siegelung unterbleiben soll, können die Pneumatikzylinder 37 mittels der vorgenannten Steuereinheit auch als Hubzylinder für den jeweils ihnen zugeordneten Siegelkopf 5 umfunktioniert bzw. angesteuert und eingesetzt werden. Hierzu kann über die Druckanschlüsse 34, 35 eine derartige Druckdifferenz eingespeist werden, dass einzelne oder auch alle Siegelköpfe 5 entsprechend der Darstellung nach Fig. 1 relativ zu der in Fig. 4 gezeigten vorbereiteten Betriebsposition nach oben von den Anschlägen in eine Wartungsposition angehoben und von dort bei Bedarf auch wieder in die untere, am Anschlag anliegende Betriebsposition abgesenkt werden.

Fig. 5 zeigt eine vergrößerte Detailansicht der Siegeleinrichtung 1 nach Fig. 4 im Bereich eines einzelnen Siegelkopfes 5. Hierbei ist der Rahmen 17 einschließlich des Federträgers 14 (Fig. 4) aus der in Fig. 4 gezeigten Ausgangsposition X in der vertikalen Siegelhubrichtung 6 nach unten gegenüber der feststehenden Behälteraufnahme 4 in eine Kontaktposition Y abgesenkt. In dieser Kontaktposition Y liegt der Siegelkopf 5 mit seiner Siegelplatte 21 unter Zwischenlage der Siegelfolie 3 und des Siegelrandes der Behälterschale 2 auf dem Aufnahmeblock 7 bzw. auf dem Rand der Behälteraufnahme 4 auf. Außerdem ist der Siegelkopf 5 immer noch durch die Federspannung des Federelementes 8 (Fig. 4) an den Anschlagpunkten 11, 12 und dem hier nicht erkennbaren, in den Fig. 2 und 3 dargestellten Anschlagpunkt 13 unter Bildung eines Anschlages an den Halteplatten 26, 27, 28 angedrückt, wodurch der Siegelkopf 5 lagegenau gegenüber den Halteplatten 26, 27, 28 und dem Aufnahmeblock 7 bzw. dem Behälteraufnahmen 4 ausgerichtet ist. Im Vergleich zur Ausgangsposition X hat sich die relative Lage der Siegelköpfe 5 zum Rahmen 17 bzw. zum Federträger 14 (Fig. 4) nicht verändert. Trotz der durch den Pneumatikzylinder 18 (Fig. 1) erzeugten angetriebenen Hubbewegung des Rahmens 17, des Federträgers 14 (Fig. 4) und der Siegelköpfe 5 sind die Federelemente 8 bzw. die Pneumatikzylinder 37 (Fig. 4) passiv geblieben und haben keine aktiv angetriebene Hubbewegung herbeigeführt.

Durch Dicken- und Lagetoleranzen insbesondere der Behälterschale 2 ist in diesem Zustand aber noch nicht sichergestellt, dass der Siegelkopf 5 mit seiner Siegelplatte 21 flächig mit umlaufend gleichmäßigem Anpressdruck auf der Siegelfolie 3 und dem Siegelrand der Behälterschale 2 aufliegt. Dies wird erst im weiteren Verfahrensschritt nach Fig. 6 herbeigeführt.

Des Weiteren zeigt Fig. 5 noch verschiedene konstruktive Einzelheiten zur Ausgestaltung des Siegelkopfes 5. Es ist zu erkennen, dass der Grundkörper 20 des Siegelkopfes 5 mehrteilig mit einem Mittelstück und einer oberen Deckplatte ausgeführt ist. Es kann aber auch eine abweichende, beispielsweise einteilige Ausführung zweckmäßig sein. Die Siegelplatte 21 ist von unten mit dem Grundkörper 20 verschraubt, indem Befestigungsschrauben von unten durch die Siegelplatte 21 und das Mittelstück des Grundkörpers 20 geführt und in Innengewinde der oberen Deckplatte des Grundkörpers 20 eingedreht sind. Der Thermofühler 22 ist von oben durch den Grundkörper 20 hindurchgeführt und stößt mit seinem unteren Ende flächig auf die Oberseite der Siegelplatte 21. Hierdurch kann die Temperatur der Siegelplatte 21 auf deren der Behälterschale 2 abgewandten Oberseite ermittelt werden. Der Grundkörper 20 ist noch mit einem umlaufenden Heizmantel 25 versehen, der mittels des Heizungsanschlusses 24 mit elektrischer Energie versorgt und auf Temperatur gebracht wird. Außenseitig des Heizmantels 25 befindet sich noch ein nicht näher bezeichneter Isoliermantel. Mittels des Heizmantels 25 wird der Grundkörper 20 aufgeheizt, der wiederum seine Wärme an die Siegelplatte 21 zum Erreichen der erforderlichen Heißsiegeltemperatur abgibt. Die tatsächlich erreichte Temperatur an der Siegelplatte 21 wird über den Thermofühler 22 ermittelt, wodurch eine Temperatursteuerung und insbesondere ein Regelkreis zur Temperaturreglung vorgesehen ist.

Fig. 6 zeigt die Siegeleinrichtung 1 nach den Fig. 4 und 5, wobei der Federträger 14 gemeinsam mit den Federelementen 8 gegenüber der Kontaktposition Y nach Fig. 5 weiter nach unten bis hin zu einer Siegelposition Z abgesenkt ist. Ausgehend von der Ausgangsposition X ist die Baueinheit aus Federträger 14 und Federelementen 8 insgesamt mittels des zentralen, unteren Pneumatikzylinders 18 um einen Siegelhub h in der Siegelhubrichtung 6 relativ zu den feststehenden Behälteraufnahmen 4 bzw. zum feststehenden Aufnahmeblock 7 abgesenkt. Da aber die Siegelköpfe 5 bereits in der Kontaktposition Y nach Fig. 5 unter Zwischenlage der Siegelfolie 3 und der Behälterschalen 2 gegen die zugeordnete Behälteraufnahme 4 stoßen, können sie der Absenkbewegung von der Kontaktposition Y zur Siegelposition Z nicht folgen. Vielmehr stehen sie auf den Siegelrändern der Behälterschalen 2 unter Zwischenlage der Siegelfolie 3 auf und bleiben dort ortsfest. In der Folge führt die Absenkbewegung der Baueinheit aus Federträger 14 und Federelementen 8 von der Kontaktposition Y (Fig. 5) zur Siegelposition Z (Fig. 6) dazu, dass alle einzelnen Siegelköpfe 5 von ihren Anschlägen um einen individuellen Abhebeweg δ abheben. Auch diese Bewegung um den Abhebeweg δ wird nicht durch die passiven, als Federelemente 8 wirkenden Pneumatikzylinder 37 herbeiführt, sondern nach obiger Funktionsbeschreibung durch den zentralen, unteren Pneumatikzylinders 18. Die einzelnen individuellen Abhebewege δ unterscheiden sich in ihrem Betrag um die Dicken- und Lagetoleranzen der einzelnen Behälterschalen 2 bzw. derer Siegelränder. Um das gleiche Maß der einzelnen individuellen Abhebewege δ werden die individuellen Kolben 33 in ihren Zylindern 32 der Pneumatikzylinder 37 gegen die einwirkende Gasdruckdifferenz und die daraus folgende Federvorspannkraft nach oben gedrückt. Da der jeweilige Abhebeweg δ im Vergleich zum möglichen Gesamthub der Pneumatikzylinder 37 klein ist, bleibt bei einer optional verschlossenen Ausführung von Gasdruckfedern bzw. der als solche wirkenden Pneumatikzylinder 37 die zuvor eingestellte Druckdifferenz und damit die Federvorspannung über den Abhebeweg δ zumindest näherungsweise konstant, steigt allenfalls geringfügig an. Sinngemäß das gleiche gilt bei einer Ausführung der Federelemente 8 als Schraubendruckfeder oder dgl.. Mittels des optionalen Druckspeichers 39 und der damit einhergehenden Volumenvergrößerung werden mögliche Druckschwankungen weiter verringert. Im Falle der bevorzugten und hier zum Einsatz kommenden Druckregelung sind die zuvor eingestellte Druckdifferenz und damit die Federvorspannung völlig unabhängig vom jeweiligen Abhebeweg δ und auch von anderen äußeren Einflüssen. In jedem Fall stellt sich in der Siegelposition Z eine bestimmte Druckdifferenz und damit eine bestimmte, fest definierte Vorspannkraft ein, die vertikal nach unten mittels der Druckstage 9 auf den jeweiligen Siegelkopf 5 übertragen wird. Da die Siegelköpfe 5 in der Siegelposition Z nicht mehr an ihren Anschlägen aufliegen, sondern davon abgehoben sind, bewirkt die genannte Vorspannung der Federelemente 8 bzw. der Pneumatikzylinder 37 einen fest definierten Siegeldruck, mittels dessen der jeweilige Siegelkopf 5 die Siegelfolie 3 auf den Siegelrand der zugeordneten Behälterschale 2 aufsiegelt.

Da sämtliche Siegelköpfe 5 von ihren Anschlägen abgehoben sind, bzw. umgekehrt die Baueinheit aus Federträger 14 und Federelementen 8 nach unten um den Abhebeweg 8 relativ zu den Siegelköpfen 5 verfahren ist und hierbei die Anschläge nicht mehr wirken, stellt sich selbsttätig ein Ausgleich von Höhen- und Lagetoleranzen der einzelnen Behälterschalen 2 derart ein, dass jede einzelne Behälterschale 2 und der ihr zugeordnete Abschnitt der Siegelfolie 3 unabhängig von den genannten Toleranzen einen bestimmten, durch die Federvorspannung der einzelnen Federelemente 8 definierten Siegelanpressdruck auch dann erfährt, wenn sich im Betrieb Lage- und/oder Dickenunterschiede und/oder andere Toleranzen der Behälterschalen 2 bzw. derer Siegelränder einstellen. Da außerdem die zuvor beschriebenen Anschlagpunkte 11, 12, 13 nicht mehr wirken und die einzelnen Siegelköpfe mittels der Gelenke 29, 30 (Fig. 4) um mindestens eine, bevorzugt mehrere senkrecht zur Siegelhubrichtung 6 stehende Achsen kippbar sind, können neben Höhentoleranzen auch Lagetoleranzen in Kipprichtung derart ausgeglichen werden, dass der jeweilige Siegelkopf 5 mit seiner ebenen Siegelfläche flächig und gleichmäßig auf dem jeweiligen Siegelrand der Behälterschale 2 mit der zwischenliegenden Siegelfolie 3 aufliegt. Aus den vorstehenden Erläuterungen ergibt sich insbesondere, dass mit dem erfindungsgemäßen Toleranzausgleich nicht die Beseitigung von bestehenden Toleranzen jedweder Art durch übermäßigen Druckaufbau oder übermäßiges Aufschmelzen der Siegelränder gemeint ist. Vielmehr bleiben die genannten Toleranzen unverändert erhalten und werden lediglich im Sinne des erfindungsgemäßen Toleranzausgleiches durch Nachgiebigkeit der Siegelköpfe 5 derart berücksichtigt, dass trotz bestehender Toleranzen eine gleichmäßige, reproduzierbare und zuverlässige Versiegelung erfolgt.

## Patentansprüche

1. Siegeleinrichtung (1) zum Versiegeln von Behälterschalen (2) mit einer Siegelfolie (3), umfassend mehrere Behälteraufnahmen (4) für die gleichzeitige Aufnahme mehrerer Behälterschalen (2) sowie mehrere, je einer Behälteraufnahme (4) zugeordnete Siegelköpfe (5), wobei die mehreren Siegelköpfe (5) für das gleichzeitige Aufsiegeln der Siegelfolie (3) auf die mehreren Behälterschalen (2) in einer Siegelhubrichtung (6) relativ zu den Behälteraufnahmen (4) verfahrbar sind, wobei die mehreren Behälteraufnahmen (4) fest miteinander verbunden und insbesondere in einem gemeinsamen Aufnahmeblock (7) zusammengefasst sind, und wobei die mehreren Siegelköpfe (5) in einer Ruheposition mittels je eines Federelementes (8) in der Siegelhubrichtung (6) gegen je einen ihnen zugeordneten Anschlag unter Vorspannung gedrückt sind,
**dadurch gekennzeichnet, dass** die Federelemente (8) an einem gemeinsamen Federträger (14) gehalten sind, und dass ein Verfahrweg des gemeinsamen Federträgers (14) mit einem Siegelhub (h) in der Siegelhubrichtung (6) mit einem derartigen Betrag vorgesehen ist, dass beim Auftreffen der Siegelköpfe (5) auf die ihnen zugeordneten Behälteraufnahmen (4) unter Zwischenlage der Behälterschalen (2) und der Siegelfolie (3) die Siegelköpfe (5) von ihren Anschlägen entgegen der einwirkenden Vorspannung abheben.

2. Siegeleinrichtung nach Anspruch 1,
**dadurch gekennzeichnet, dass** der einzelne Siegelkopf (5) um mindestens eine, bevorzugt mehrere senkrecht zur Siegelhubrichtung (6) stehende Achsen kippbar mit dem ihm zugeordneten Federelement (8) verbunden ist.

3. Siegeleinrichtung nach Anspruch 2,
**dadurch gekennzeichnet, dass** zwischen einem einzelnen Siegelkopf (5) und dem ihm zugeordneten Federelement (8) eine gelenkig mit dem Siegelkopf (5) und gelenkig mit dem Federelement (8) verbundene Druckstange (9) vorgesehen ist.

4. Siegeleinrichtung nach einem der Ansprüche 1 bis 3,
**dadurch gekennzeichnet, dass** zur Bildung des Anschlages für einen einzelnen Siegelkopf (5) insgesamt drei Anschlagpunkte (11, 12, 13) vorgesehen sind.

5. Siegeleinrichtung nach Anspruch 4,
**dadurch gekennzeichnet, dass** der erste Anschlagpunkt (11) durch zwei ebene aufeinander treffende Flächen, der zweite Anschlagpunkt (12) durch eine dachförmige Kerbe mit einem entsprechenden Gegenstück, und der dritte Anschlagpunkt (13) durch eine umlaufend mit einem Rand versehene, insbesondere konische Vertiefung mit einem entsprechenden Gegenstück gebildet sind.

6. Siegeleinrichtung nach einem der Ansprüche 1 bis 5,
**dadurch gekennzeichnet, dass** das Federelement (8) durch eine Gasdruckfeder insbesondere in Form eines Pneumatikzylinders (37) gebildet ist, wobei der Pneumatikzylinder (37) während des Siegelvorganges mit einer vorbestimmten Druckdifferenz beaufschlagt ist.

7. Siegeleinrichtung nach Anspruch 6,
**dadurch gekennzeichnet, dass** der Pneumatikzylinder (37) zur Erzielung der vorbestimmten Druckdifferenz mit einem Druckregelventil (38) versehen ist.

8. Siegeleinrichtung nach Anspruch 6 oder 7,
**dadurch gekennzeichnet, dass** der Pneumatikzylinder (37) zur Beibehaltung der vorbestimmten Druckdifferenz mit einem Druckspeicher (39) verbunden ist.

9. Siegeleinrichtung nach einem der Ansprüche 6 bis 8,
**dadurch gekennzeichnet, dass** der Pneumatikzylinder (37) abseits des Siegelvorganges als Hubzylinder ansteuerbar ist.

10. Siegeleinrichtung nach einem der Ansprüche 1 bis 9,
**dadurch gekennzeichnet, dass** eine ortsfest gehaltene Grundplatte (10) vorgesehen ist, auf der die fest miteinander verbundenen Behälteraufnahmen (4) und insbesondere der Aufnahmeblock (7) während des Siegelvorganges ortsfest positioniert ist, und dass der Federträger (14) oberhalb der Grundplatte (10) positioniert ist, wobei der Federträger (14) mit den mehreren daran gehaltenen Federelementen (8) und den zugeordneten Siegelköpfen (5) aus einer oberen Ausgangsposition (X) heraus nach unten zur Grundplatte (10) und zu den Behälteraufnahmen (4) hin in der Siegelhubrichtung (6) verfahrbar ist.

11. Siegeleinrichtung nach Anspruch 10,
**dadurch gekennzeichnet, dass** der oberhalb der Grundplatte (10) angeordnete Federträger (14), ein unterhalb der Grundplatte (10) angeordneter Bodenträger (15) und mindestens zwei Säulen (16) zusammen einen geschlossenen Rahmen (17) bilden, der aus der oberen Ausgangsposition (X) heraus gegenüber der Grundplatte (10) mit den Behälteraufnahmen (4) in der Siegelhubrichtung (6) nach unten absenkbar ist.

12. Siegeleinrichtung nach Anspruch 11,
**dadurch gekennzeichnet, dass** zwischen dem Bodenträger (15) und der Grundplatte (10) ein Stellelement insbesondere in Form eines Pneumatikzylinders (18) angeordnet ist, mittels dessen der geschlossene Rahmen (17) in der Siegelhubrichtung (6) absenkbar und in Gegenrichtung anhebbar ist.

13. Siegeleinrichtung nach einem der Ansprüche 1 bis 12,
**dadurch gekennzeichnet, dass** der Siegelkopf (5) einen Grundkörper (20) sowie eine lösbar und austauschbar am Grundkörper befestigte Siegelplatte (21) umfasst,

14. Verfahren zum Versiegeln von Behälterschalen (2) mit einer Siegelfolie (3) insbesondere mittels einer Siegeleinrichtung (1) nach einem der Ansprüche 1 bis 13, umfassend folgende Verfahrensschritte:
- mehrere fest miteinander verbundene und insbesondere in einem gemeinsamen Aufnahmeblock (7) zusammengefasste Behälteraufnahmen (4) nehmen gleichzeitig mehrere Behälterschalen (2) auf;
- mehrere einzelne, je einer Behälteraufnahme (4) zugeordnete Siegelköpfe (5) werden in einer Ruheposition mittels je eines Federelementes (8) in einer Siegelhubrichtung (6) gegen je einen ihnen zugeordneten Anschlag unter Vorspannung angedrückt;
- für das gleichzeitige Aufsiegeln der Siegelfolie (3) auf die mehreren Behälterschalen (2) wird ein gemeinsamer Federträger (14), an dem die Federelemente (8) gemeinsam gehalten sind, zusammen mit den Federelementen (8) und den Siegelköpfen (5) in der Siegelhubrichtung (6) relativ zu den Behälteraufnahmen (4) so weit verfahren, dass die Siegelköpfe (5) beim Auftreffen auf die ihnen zugeordneten Behälteraufnahmen (4) unter Zwischenlage der Behälterschalen (2) und der Siegelfolie (3) von ihren Anschlägen entgegen der auf sie einwirkenden Vorspannung abheben.

## Claims

1. Sealing device (1) for sealing container shells (2) with a sealing film (3), the device comprising a plurality of container receptacles (4) for the simultaneous reception of a plurality of container shells (2) and a plurality of sealing heads (5), each assigned to a container receptacle (4), wherein the plurality of sealing heads (5) can be traversed relative to the container receptacles (4) in a sealing stroke direction (6) for the simultaneous sealing of the sealing film (3) onto the plurality of container shells (2), wherein the plurality of container shells (2) are permanently joined to one another and in particular combined in a common reception block (7), and wherein each of the plurality of sealing heads (5) is, in an inoperative position, pushed against an associated stop under preload in the sealing stroke direction (6) by means of a spring element (8),
**characterised in that** the spring elements (8) are held on a common spring support (14), and **in that** a traversing distance of the common spring support (14) with a sealing stroke (h) in the sealing stroke direction (6) is given such a value that, when the sealing heads (5) hit the associated container receptacles (4) with the interposition of the container shells (2) and the sealing film (3), the sealing heads (5) lift off their stops against the acting preload.

2. Sealing device according to claim 1,
**characterised in that** the individual sealing head (5) is joined to the associated spring element (8) while being tiltable about at least one axis and preferably about several axes which are perpendicular to the sealing stroke direction (6).

3. Sealing device according to claim 2,
**characterised in that** a push rod (9) pivotably joined to the sealing head (5) and to the spring element (8) is provided between an individual sealing head (5) and the associated spring element (8).

4. Sealing device according to any of claims 1 to 3,
**characterised in that** three stop points (11, 12, 13) in total are provided to form the stop for an individual sealing head (5).

5. Sealing device according to claim 4,
**characterised in that** the first stop point (11) is represented by two abutting flat surfaces, the second stop point (12) is represented by a roof-shaped notch with a corresponding counterpart and the third stop point (13) is represented by an in particular conical indentation provided with a continuous edge and having a corresponding counterpart.

6. Sealing device according to any of claims 1 to 5,
**characterised in that** the spring element (8) is represented by a gas pressure spring, in particular in the form of a pneumatic cylinder (37), wherein a preset pressure differential is applied to the pneumatic cylinder (37) during the sealing process.

7. Sealing device according to claim 6,
**characterised in that** the pneumatic cylinder (37) is fitted with a pressure control valve (38) for obtaining the preset pressure differential.

8. Sealing device according to claim 6 or 7,
**characterised in that** the pneumatic cylinder (37) is connected to a pressure accumulator (39) for maintaining the preset pressure differential.

9. Sealing device according to any of claims 6 to 8,
**characterised in that** the pneumatic cylinder (37) can be controlled as a lifting cylinder away from the sealing process.

10. Sealing device according to any of claims 1 to 9,
**characterised in that** a stationary base plate (10) is provided, on which the container receptacles (4), which are permanently joined to one another, and in particular the reception block (7) are placed in a stationary position during the sealing process, and **in that** the spring support (14) is positioned above the base plate (10), wherein the spring support (14) with the plurality of spring elements (8) held thereon and the associated sealing heads (5) can be moved from an upper starting position (X) downwards towards the base plate (10) and the container receptacles (4) in the sealing stroke direction (6).

11. Sealing device according to claim 10,
**characterised in that** the spring support (14) located above the base plate (10), a base support (15) located below the base plate (10) and at least two columns (16) together form a closed frame (17) which can be lowered from the upper starting position (X) relative to the base plate (10) with the container receptacles (4) in the sealing stroke direction (6).

12. Sealing device according to claim 11,
**characterised in that** an actuating element, in particular in the form of a pneumatic cylinder (18), by means of which the closed frame (17) can be lowered in the sealing stroke direction (6) and raised in the opposite direction, is provided between the base support (15) and the base plate (10).

13. Sealing device according to any of claims 1 to 12,
**characterised in that** the sealing head (5) comprises a base body (20) and a sealing plate (21) which is releasably and replaceably secured to the base body.

14. Method for sealing container shells (2) with a sealing film (3), in particular using a sealing device (1) according to any of claims 1 to 13, comprising the following process steps:
- a plurality of container receptacles (4) which are permanently joined to one another and in particular combined in a common reception block (7) simultaneously receive a plurality of container shells (2);
- a plurality of individual sealing heads (5), each assigned to one container receptacle (4), are in an inoperative position pushed against an assigned stop each under preload in a sealing stroke direction (6) by means of a spring element (8) each;
- for the simultaneous application of the sealing film (3) to the plurality of container shells (2), a common spring support (14) on which the spring elements (8) are jointly held is, together with the spring elements (8) and the sealing heads (5), traversed in the sealing stroke direction (6) relative to the container receptacles (4) to such an extent that the sealing heads (5), when hitting the associated container receptacles (4) with the interposition of the container shells (2) and the sealing film (3), lift off their stops against the acting preload.

## Revendications

1. Dispositif de scellage (1) pour sceller des coques de récipients (2) avec un film de scellage (3), comprenant plusieurs logements pour récipients (4) pour loger en même temps plusieurs coques (2), ainsi que plusieurs têtes de scellage (5) associées chacune à un logement pour récipient (4), étant précisé que les têtes de scellage (5), pour le scellage simultané du film de scellage (3) sur les coques (2), sont aptes à être déplacées dans un sens de course de scellage (6) par rapport aux logements pour récipients (4), que les logements pour récipients (4) sont reliés solidement entre eux et sont en particulier réunis dans un bloc de logements commun (7), et que les têtes de scellage (5) en position de repos sont pressées dans le sens de course de scellage (6) avec une contrainte contre des butées respectives qui leur sont associées, à l'aide d'un élément à ressort (8),
**caractérisé en ce que** les éléments à ressort (8) sont fixés à un support de ressorts commun (14) et **en ce qu'**une distance de déplacement du support de ressorts commun (14) avec une course de scellage (h) dans le sens de course de scellage (6) est dotée d'une valeur telle que lorsque les têtes de scellage (5) arrivent sur les logements pour récipients (4) qui leur sont associés, avec entre les deux les coques de récipients (2) et le film de scellage (3), les têtes de scellage (5) se soulèvent de leurs butées à l'encontre de la contrainte qui agit.

2. Dispositif de scellage selon la revendication 1,
**caractérisé en ce que** la tête de scellage individuelle (5) est reliée à l'élément à ressort (8) qui lui est associé, en étant apte à pivoter sur au moins un axe, de préférence plusieurs axes perpendiculaires au sens de course de scellage (6).

3. Dispositif de scellage selon la revendication 2,
**caractérisé en ce qu'**il est prévu entre une tête de scellage individuelle (5) et l'élément à ressort (8) qui lui est associé une barre de pression (9) qui est reliée de manière articulée à la tête de scellage (5) et de manière articulée à l'élément à ressort (8).

4. Dispositif de scellage selon l'une des revendications 1 à 3,
**caractérisé en ce que** pour former la butée pour une tête de scellage individuelle (5), il est prévu en tout trois points de butée (11, 12, 13).

5. Dispositif de scellage selon la revendication 4,
**caractérisé en ce que** le premier point de butée (11) est formé par deux surfaces planes qui se rejoignent, le deuxième point de butée (12) par une encoche en forme de toit avec une partie opposée correspondante, et le troisième point de butée (13) par un creux, en particulier conique, qui est pourvu d'un bord, sur tout le tour, et d'une partie opposée correspondante.

6. Dispositif de scellage selon l'une des revendications 1 à 5,
**caractérisé en ce que** l'élément à ressort (8) est formé par un ressort à gaz comprimé en particulier sous la forme d'un vérin pneumatique (37), étant précisé que le vérin pneumatique (37) est contraint pendant l'opération de scellage avec une différence de pression prédéfinie.

7. Dispositif de scellage selon la revendication 6,
**caractérisé en ce que** le vérin pneumatique (37) est pourvu, pour atteindre la différence de pression prédéfinie, d'une soupape de régulation de pression (38).

8. Dispositif de scellage selon la revendication 6 ou 7,
**caractérisé en ce que** le vérin pneumatique (37) est pourvu, pour maintenir la différence de pression prédéfinie, d'un accumulateur de pression (39).

9. Dispositif de scellage selon l'une des revendications 6 à 8,
**caractérisé en ce que** le vérin pneumatique (37), en dehors de l'opération de scellage, est apte à être commandé comme vérin de levage.

10. Dispositif de scellage selon l'une des revendications 1 à 9,
**caractérisé en ce qu'**il est prévu une plaque de base fixe (10) sur laquelle les logements pour récipients (4) reliés de manière fixe entre eux et en particulier le bloc de logements (7) sont positionnés de manière fixe pendant l'opération de scellage, et **en ce que** le support de ressorts (14) est positionné au-dessus de la plaque de base (10), étant précisé que le support de ressorts (14) avec les éléments à ressort (8) fixés sur lui et les têtes de scellage (5) associées est apte à être sorti d'une position initiale supérieure (X) vers le bas, en direction de la plaque de base (10) et des logements pour récipients (4), dans le sens de course de scellage (6).

11. Dispositif de scellage selon la revendication 10,
**caractérisé en ce que** le support de ressorts (14) disposé au-dessus de la plaque de base (10), un support inférieur (15) disposé au-dessous de la plaque de base (10) et au moins deux colonnes (16) forment ensemble un châssis fermé (17) qui, à partir de la position initiale supérieure (X), est apte à être abaissé vers le bas dans le sens de course de scellage, avec les logements pour récipients (4), par rapport à la plaque de base (10).

12. Dispositif de scellage selon la revendication 11,
**caractérisé en ce qu'**il est prévu entre le support inférieur (15) et la plaque de base (10) un actionneur, en particulier sous la forme d'un vérin pneumatique (18), à l'aide duquel le châssis fermé (17) est apte à être abaissé dans le sens de course de scellage (6) et à être relevé en sens inverse.

13. Dispositif de scellage selon l'une des revendications 1 à 12,
**caractérisé en ce que** la tête de scellage (5) comprend un corps de base (20) ainsi qu'une plaque de scellage (21) qui est fixée de manière amovible et échangeable au corps de base.

14. Procédé pour sceller des coques de récipients (2) avec un film de scellage (3) en particulier à l'aide d'un dispositif de scellage (1) selon l'une des revendications 1 à 13, comprenant les étapes de procédé suivantes :
- plusieurs logements pour récipients (4) reliés de manière fixe entre eux et réunis en particulier dans un bloc de logements commun (7) logent plusieurs coques de récipients (2) en même temps ;
- en position de repos, plusieurs têtes de scellage individuelles (5) associées chacune à un logement pour récipient (4) sont pressées avec une contrainte dans un sens de course de scellage (6) contre une butée qui leur est associée, à l'aide d'un élément à ressort respectif (8) ;
- pour sceller en même temps le film de scellage (3) sur les coques de récipients (2), un support de ressorts commun (14) auquel les éléments à ressort (8) sont fixés conjointement est déplacé avec les éléments à ressort (8) et les têtes de scellage (5) dans le sens de course de scellage (6), par rapport aux logements pour récipients (4), jusqu'à ce que les têtes de scellage (5), en arrivant sur les logements pour récipients (4) qui leur sont associés, avec entre les deux les coques de récipients (2) et le film de scellage (3) soient soulevées de leurs butées à l'encontre de la contrainte qui agit sur elles.
